# EUROPEAN PATENT APPLICATION

(11) **EP 4 590 030 A1**
(43) Date of publication of application: **23.07.2025**
(21) Application number: 23868671.1
(22) Date of filing: 22.09.2023
(51) Int. Cl.: H04W 48/16, H04W 48/20, H04W 36/08

(54) **ELECTRONIC DEVICE USING NEARBY CELL INFORMATION BASED ON BIG DATA, AND OPERATION METHOD THEREOF**

(30) Priority: 23.09.2022 KR 20220120705; 27.09.2022 KR 20220122888
(71) Applicant: Samsung Electronics Co., Ltd., Suwon-si, Gyeonggi-do 16677 (KR)
(72) Inventor: LEE, Sanghyun, Suwon-si Gyeonggi-do 16677 (KR); NAM, Dongha, Suwon-si Gyeonggi-do 16677 (KR); LEE, Kyungwon, Suwon-si Gyeonggi-do 16677 (KR)
(74) Representative: Gulde & Partner
(86) International application number: PCT/KR2023/014571
(87) International publication number: WO 2024/063620

(57) **Abstract**

According to one embodiment, an electronic device may comprise at least one processor. The at least one processor may be configured to transmit information associated with a first cell to a server. The at least one processor may be configured to receive, from the server, information about at least one nearby cell determined on the basis of the information associated with the first cell. The at least one processor may be configured to check information about at least one second cell stored in the electronic device. The at least one processor may be configured to perform scanning by using the information about the at least one nearby cell and the information about the at least one second cell. Other embodiments are possible.

## Description

### [Technical Field]

An embodiment of the disclosure relates to an electronic device using neighbor cell information and an operation method thereof.

### [Background Art]

The electronic device may receive information from a network (e.g., a base station or cell). The electronic device may perform a radio access network (RAN)-related operation based on the received information.

For example, an electronic device may receive information associated with a neighbor cell from a network. The electronic device may perform at least one operation for cell reselection based on the information associated with a neighbor cell. The electronic device may perform at least one operation for handover based on the information associated with a neighbor cell. Accordingly, the RAN-related operation may be performed based on information provided from the network.

Meanwhile, the electronic device may measure at least one piece of information related to the electric field. The measurement result may be provided to a server for managing the quality of the network. The server may collect measurement results (which may also be referred to as big data) from a plurality of electronic devices, and thus an electric field map may be generated. Network operators may also install new base stations by using the electric field map. The measurement results (or information derived based on the measurement results) from a plurality of electronic devices have conventionally been used by the network operator but have not been used by electronic devices in communication.

### [Detailed Description of the Invention]

### [Technical Solution]

According to an embodiment, an electronic device may include at least one processor. The at least one processor may be configured to transmit information associated with a first cell to a server. The at least one processor may be configured to receive, from the server, information about at least one neighbor cell determined based on the information associated with the first cell. The at least one processor may be configured to identify information about at least one second cell. stored in the electronic device. The at least one processor may be configured to perform a scan using the information about the at least one neighbor cell and the information about the at least one second cell.

According to an embodiment, a method of operating an electronic device may include transmitting information associated with a first cell to a server. The method of operating the electronic device may include receiving information about at least one neighbor cell determined based on information associated with the first cell from the server. The method of operating the electronic device may include identifying information about at least one second cell, stored in the electronic device. The method of operating the electronic device may include performing a scan using the information about the at least one neighbor cell and the information about the at least one second cell.

According to an embodiment, there is provided a non-transitory computer-readable storage medium storing at least one instruction, wherein the at least one instruction, when executed by at least one processor of an electronic device, may cause the electronic device to perform at least one operation. The at least one operation may include transmitting information associated with the first cell to the server. The at least one operation may include receiving, from the server, information about at least one neighbor cell determined based on the information associated with the first cell. The at least one operation may include identifying information about at least one second cell, stored in the electronic device. The at least one operation may include performing a scan using the information about the at least one neighbor cell and the information about the at least one second cell.

### [Brief Description of Drawings]

FIG. 1 is a block diagram of an electronic device in a network environment according to an embodiment;
FIG. 2A is a block diagram of an electronic device for supporting legacy network communication and 5G network communication according to an embodiment;
FIG. 2B is a block diagram of an electronic device for supporting legacy network communication and 5G network communication according to an embodiment;
FIG. 3 illustrates an example of an electric field map according to an embodiment;
FIG. 4 is a flowchart illustrating a method of operating an electronic device and a server according to an embodiment;
FIG. 5A illustrates information about neighbor cells according to an embodiment;
FIG. 5B illustrates an electric field map according to an embodiment;
FIG. 6A illustrates information about distant neighbor cells according to an embodiment;
FIG. 6B illustrates an electric field map according to an embodiment;
FIG. 7A is a flowchart illustrating a method of operating an electronic device according to an embodiment;
FIG. 7B is a flowchart illustrating a method of operating an electronic device according to an embodiment;
FIG. 8A is a flowchart illustrating a method of operating an electronic device according to an embodiment;
FIG. 8B is a flowchart illustrating a method of operating an electronic device according to an embodiment;
FIG. 8C is a flowchart illustrating a method of operating an electronic device according to an embodiment;
FIG. 9A is a flowchart illustrating a method of operating an electronic device according to an embodiment;
FIG. 9B is a flowchart illustrating a method of operating an electronic device according to an embodiment;
FIG. 9C is a flowchart illustrating a method of operating an electronic device according to an embodiment;
FIG. 10 is a flowchart illustrating a method of operating an electronic device according to an embodiment;
FIG. 11A is a flowchart illustrating a method of operating an electronic device according to an embodiment;
FIG. 11B is a flowchart illustrating a method of operating an electronic device according to an embodiment;
FIG. 12 is a flowchart illustrating a method of operating an electronic device according to an embodiment;
FIG. 13 is a flowchart illustrating a method of operating an electronic device according to an embodiment;
FIG. 14 is a flowchart illustrating a method of operating an electronic device according to an embodiment; and
FIG. 15 is a flowchart illustrating a method of operating an electronic device according to an embodiment.

### [Mode for Carrying out the Invention]

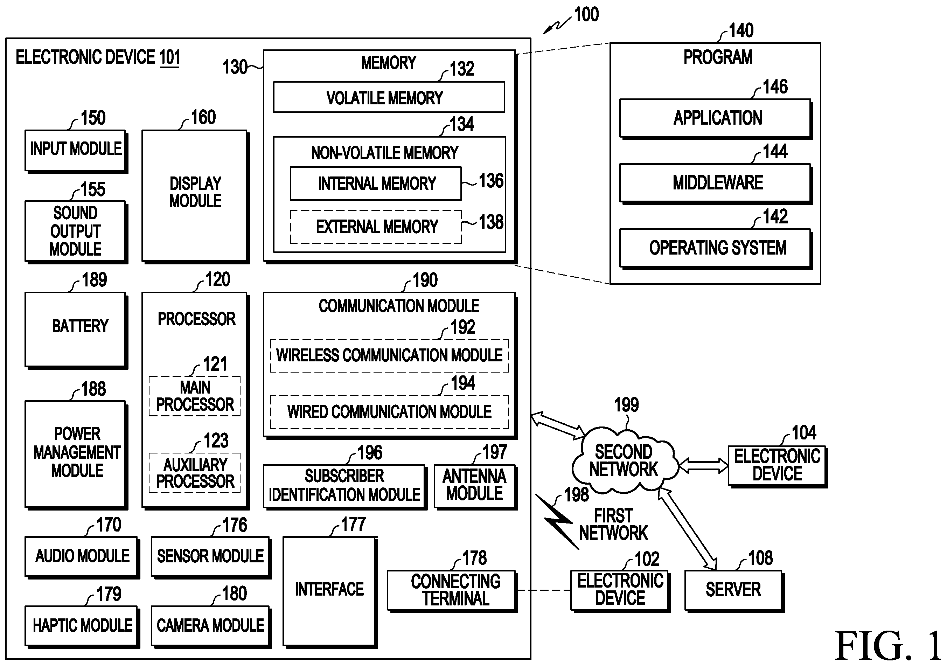

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

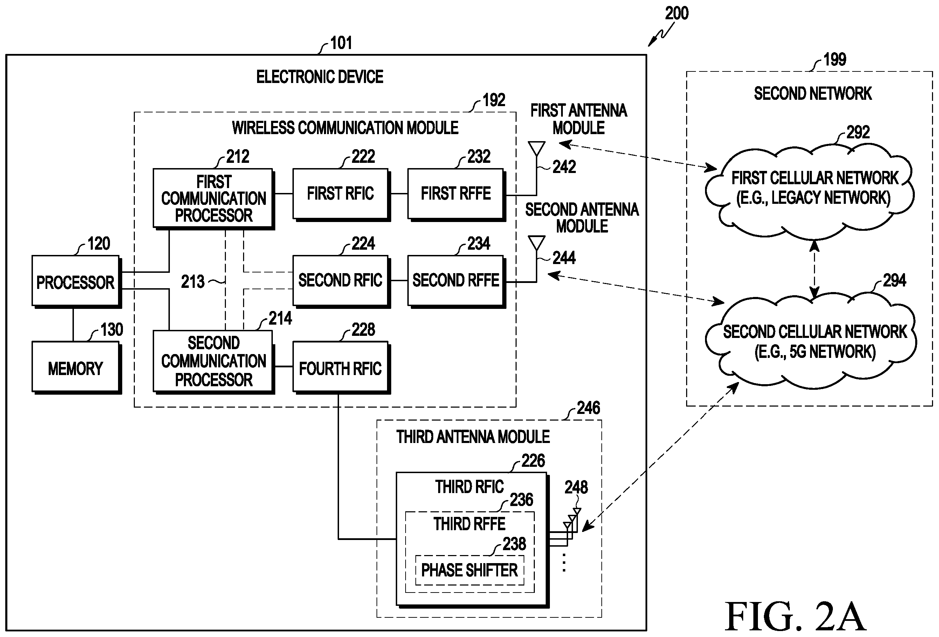

FIG. 2A is a block diagram 200 of the electronic device 101 for supporting legacy network communication and 5G network communication according to an embodiment of the disclosure. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include the processor 120 and the memory 130. The second network 199 may include a first cellular network 292 and a second cellular network 294. According to another embodiment, the electronic device 101 may further include at least one component of the components illustrated in FIG. 1, and the second network 199 may further include at least another network. According to an embodiment, the first communication processor 212, the second communication processor 214, the first RFIC 222, the second RFIC 224, the fourth RFIC 228, the first RFFE 232, and the second RFFE 234 may form at least a part of the wireless communication module 192. According to another embodiment, the fourth RFIC 228 may be omitted or may be included as a part of the third RFIC 226.

The first communication processor 212 may establish a communication channel of a band to be used for wireless communication with the first cellular network 292 and may support legacy network communication through the established communication channel. According to an embodiment, the first cellular network 292 may be a legacy network including a second generation (2G) network, a 3G network, a 4G network, and/or a long-term-evolution (LTE) network. The second communication processor 214 may establish a communication channel corresponding to a designated band (e.g., approximately 6 GHz to approximately 60 GHz) of bands to be used for wireless communication with the second cellular network 294 and may support the 5G network communication through the established communication channel. According to an embodiment, the second cellular network 294 may be a 5G network defined in the 3GPP. **In** addition, according to an embodiment, the first communication processor 212 or the second communication processor 214 may establish a communication channel corresponding to another designated band (e.g., approximately 6 GHz or lower) of the bands to be used for wireless communication with the second cellular network 294 and may support the 5G network communication through the established communication channel.

The first communication processor 212 may transmit and receive data to and from the second communication processor 214. For example, data that has been classified to be transmitted through the second cellular network 294 may be changed to be transmitted through the first cellular network 292. **In** this case, the first communication processor 212 may receive transmission data from the second communication processor 214. For example, the first communication processor 212 may transmit and receive data to and from the second communication processor 214 through an inter-processor interface 213. The inter-processor interface 213 may be implemented as, for example, a universal asynchronous receiver/transmitter (UART) (e.g., a high speed-UART (HS-UART)) or a peripheral component interconnect bus express (PCIe) interface, but there is no limitation in the kinds thereof. Alternatively, the first communication processor 212 and the second communication processor 214 may exchange control information and packet data information using, for example, shared memory. The first communication processor 212 may transmit and receive various information, such as sensing information, information on output strength, resource block (RB) allocation information, and the like, to and from the second communication processor 214.

Depending on the implementation, the first communication processor 212 may not be directly connected to the second communication processor 214. In this case, the first communication processor 212 may transmit and receive data to and from the second communication processor 214 through the processor 120 (e.g., application processor). For example, the first communication processor 212 and the second communication processor 214 may transmit and receive data to and from the processor 120 (e.g., an application processor) through the HS-UART interface or a PCIe interface, but there is no limitation in the kinds of the interface. Alternatively, the first communication processor 212 and the second communication processor 214 may exchange control information and packet data information with the processor 120 (e.g., application processor) using shared memory.

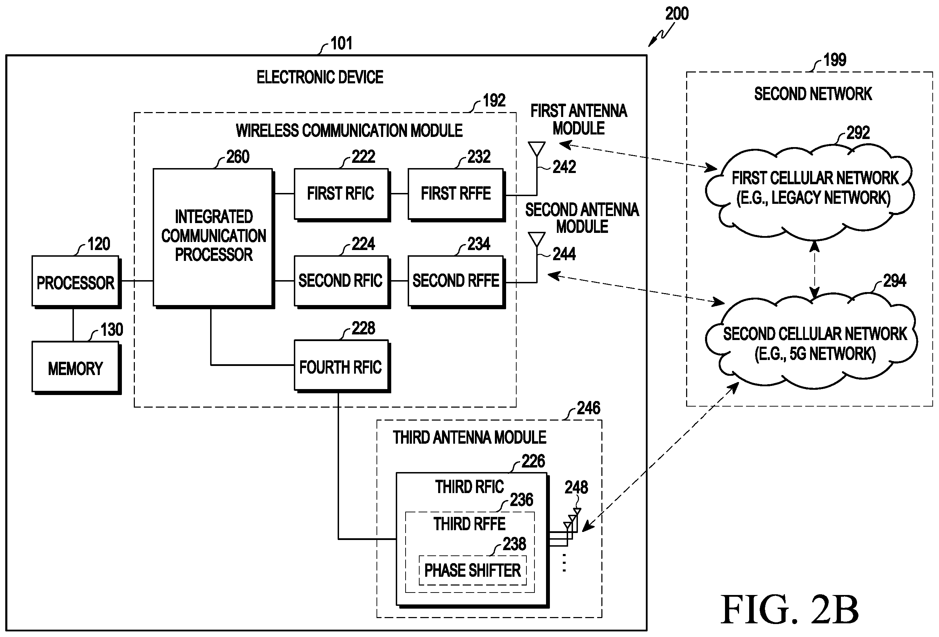

According to an embodiment, the first communication processor 212 and the second communication processor 214 may be implemented in a single chip or a single package. According to various embodiments, the first communication processor 212 or the second communication processor 214 may be formed in a single chip or a single package with the processor 120, an auxiliary coprocessor 123, or a communication module 190. For example, as shown in FIG. 2B, an integrated communication processor 260 may support both a function for communication with the first cellular network 292 and a function for communication with the second cellular network 294.

As described above, at least one of the processor 120, the first communication processor 212, the second communication processor 214, or the integrated communication processor 260 may be implemented as a single chip or a single package. In this case, the single chip or single package may include memory (or a storage device) for storing instructions that cause at least some of the operations performed according to an embodiment to be performed, and a processing circuit (or without limitation in its name, such as an arithmetic unit) for executing the instructions.

Upon transmission, the first RFIC 222 may convert a baseband signal generated by the first communication processor 212 into a radio frequency (RF) signal of approximately 700 MHz to approximately 3 GHz that is used in the first cellular network 292 (e.g., a legacy network). Upon reception, an RF signal may be obtained from the first cellular network 292 (e.g., a legacy network) through an antenna (e.g., the first antenna module 242) and may be pre-processed through an RFFE (e.g., the first RFFE 232). The first RFIC 222 may convert the pre-processed RF signal into a baseband signal so as to be processed by the first communication processor 212.

Upon transmission, the second RFIC 224 may convert a baseband signal generated by the first communication processor 212 or the second communication processor 214 into an RF signal (hereinafter referred to as a "5G Sub6 RF signal") in a Sub6 band (e.g., approximately 6 GHz or lower) used in the second cellular network 294 (e.g., a 5G network). Upon reception, a 5G Sub6 RF signal may be obtained from the second cellular network 294 (e.g., a 5G network) through an antenna (e.g., the second antenna module 244) and may be pre-processed through an RFFE (e.g., the second RFFE 234). The second RFIC 224 may convert the pre-processed 5G Sub6 RF signal into a baseband signal so as to be processed by a relevant communication processor of the first communication processor 212 or the second communication processor 214.

The third RFIC 226 may convert a baseband signal generated by the second communication processor 214 into an RF signal (hereinafter referred to as a "5G Above6 RF signal") in a 5G Above6 band (e.g., approximately 6 GHz to approximately 60 GHz) to be used in the second cellular network 294 (e.g., a 5G network). Upon reception, a 5G Above6 RF signal may be obtained from the second cellular network 294 (e.g., a 5G network) through an antenna (e.g., the antenna 248) and may be pre-processed through a third RFFE 236. The third RFIC 226 may convert the pre-processed 5G Above6 RF signal into a baseband signal so as to be processed by the second communication processor 214. According to an embodiment, the third RFFE 236 may be implemented as a part of the third RFIC 226.

According to an embodiment, the electronic device 101 may include the fourth RFIC 228 separately from the third RFIC 226 or as at least a part of the third RFIC 226. In this case, the fourth RFIC 228 may convert a baseband signal generated by the second communication processor 214 into an RF signal (hereinafter referred to as an "IF signal") in an intermediate frequency band (e.g., approximately 9 GHz to approximately 11 GHz) and may provide the IF signal to the third RFIC 226. The third RFIC 226 may convert the IF signal into a 5G Above6 RF signal. Upon reception, a 5G Above6 RF signal may be received from the second cellular network 294 (e.g., a 5G network) through an antenna (e.g., the antenna 248) and may be converted into an IF signal by the third RFIC 226. The fourth RFIC 228 may convert the IF signal into a baseband signal so as to be processed by the second communication processor 214.

According to an embodiment, the first RFIC 222 and the second RFIC 224 may be implemented as at least a part of a single package or a single chip. According to an embodiment, when the first RFIC 222 and the second RFIC 224 in FIG. 2A or FIG. 2B are implemented as a single chip or a single package, they may be implemented as an integrated RFIC. In this case, the integrated RFIC may be connected to the first RFFE 232 and the second RFFE 234 to convert a baseband signal into a signal of a band supported by the first RFFE 232 and/or the second RFFE 234, and transmit the converted signal to one of the first RFFE 232 and the second RFFE 234. According to an embodiment, the first RFFE 232 and the second RFFE 234 may be implemented as at least a part of a single package or a single chip. According to an embodiment, at least one antenna module of the first antenna module 242 or the second antenna module 244 may be omitted or may be combined with another antenna module to process RF signals in a plurality of corresponding bands.

According to an embodiment, the third RFIC 226 and the antenna 248 may be disposed on the same substrate to form a third antenna module 246. For example, the wireless communication module 192 or the processor 120 may be disposed on a first substrate (e.g., a main PCB). In this case, the third RFIC 226 may be disposed on a partial region (e.g., a lower surface) of a second substrate (e.g., a sub-PCB) separate from the first substrate, and the antenna 248 may be disposed in another partial region (e.g., upper surface) thereof so that the third antennal module 246 may be formed. By placing the third RFIC 226 and the antenna 248 on the same substrate, it is possible to reduce the length of a transmission line therebetween. This may reduce, for example, loss (e.g., attenuation) of a signal in a high frequency band (e.g., about 6 GHz to about 60 GHz) used for 5G network communication due to the transmission line. As a result, the electronic device 101 may improve the quality or speed of communication with the second cellular network 294 (e.g., 5G network).

According to an embodiment, the antenna 248 may be formed as an antenna array including a plurality of antenna elements that may be used for beamforming. In this case, the third RFIC 226 may include a plurality of phase shifters 238 corresponding to the plurality of antenna elements, for example, as a part of the third RFFE 236. Upon transmission, each of the plurality of phase shifters 238 may convert the phase of a 5G Above6 RF signal to be transmitted to the outside of the electronic device 101 (e.g., a base station (BS) of a 5G network) through a corresponding antenna element. Upon reception, each of the plurality of phase shifters 238 may convert the phase of the 5G Above6 RF signal received from the outside into the same or substantially the same phase through the corresponding antenna element. This may enable transmission or reception through beamforming between the electronic device 101 and the outside.

The second cellular network 294 (e.g., 5G network) may operate independently of (e.g., stand-alone (SA)) the first cellular network 292 (e.g., legacy network), or may operate in conjunction with the first cellular network 292 (e.g., non-standalone (NSA)). For example, in the 5G network, there may be only an access network (e.g., 5G radio access network (RAN) or next generation RAN (NG RAN)), but there may be no core network (e.g., next generation core (NGC)). In this case, the electronic device 101 may access the access network of a 5G network and may then access an external network (e.g., the Internet) under the control of a core network (e.g., evolved packed core (EPC)) of a legacy network. Protocol information (e.g., LTE protocol information) for communication with the legacy network or protocol information (e.g., new radio (NR) protocol information) for communication with the 5G network may be stored in the memory 230, and may be accessed by other components (e.g., the processor 120, the first communication processor 212, or the second communication processor 214).

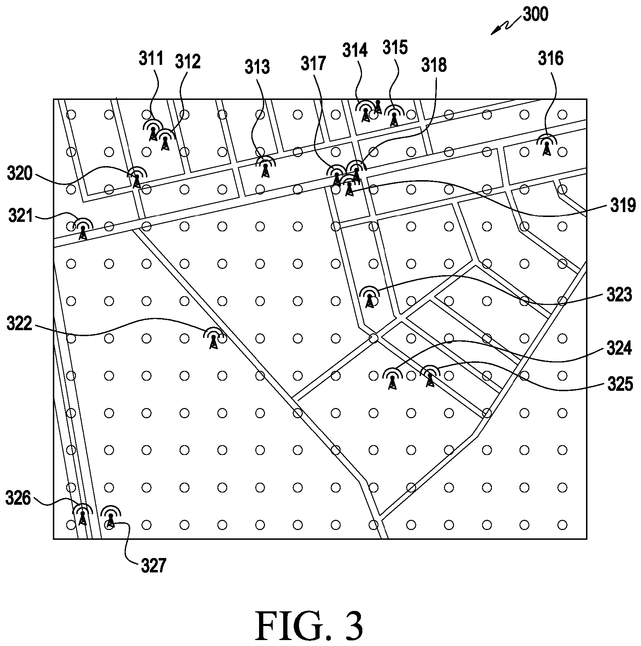

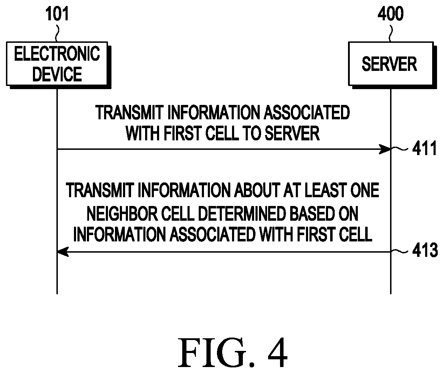

FIG. 3 illustrates an example of an electric field map according to an embodiment. The embodiment of FIG. 3 will be described with reference to FIG. 4. FIG. 4 is a flowchart illustrating a method of operating an electronic device and a server according to an embodiment.

According to an embodiment, the electric field map 300 may include information about the location of the at least one base station 311 to 327 within a predetermined region and information about the electric field at a plurality of points within the predetermined region. For example, the location of the at least one base station 311 to 327 of the electric field map 300 may be expressed as latitude/longitude information or GPS coordinates, but there is no limitation on the expression method. A plurality of points within a predetermined region may be defined in a grid form, for example, as shown in FIG. 3, but there is no limitation on the definition method. Information about the electric field for a plurality of points may be, for example, the reception strength at the corresponding points (e.g., which may be expressed, for example, as RSRP, RSRQ, RSSI, and SINR, but is not limited thereto), but this is an exemplary. A network operator may generate at least some of the information of the electric field map 300, based on information reported from, for example, an electronic device using a network service located in at least some of the plurality of points. The network operator may generate at least some of the information of the electric field map 300, based on information measured by, for example, measurement equipment located in at least some of the plurality of points. At least some of the information of the electric field map 300 may be provided by other network operators and/or location service providers. The network operator may improve network quality by using the electric field map 300. For example, the network operator may additionally install a base station or cell at a corresponding point to improve the electric field at a point having a relatively weak electric field.

According to an embodiment, the server 400 of a location service provider may configure information about neighbor cells associated with a specific cell for the information of the electric field map 300. The server 400 may be constructed by the location service provider, for example, and may, but is not limited to, collect information using crowdsourcing technology. The electronic device 101 may, for example, transmit and receive data via Internet communication (or Internet PDU session) with the server 400. For example, the electronic device 101 may execute an application capable of transmitting and receiving data to and from the server 400. For example, the data transmitted and received between the electronic device 101 and the server 400 may be, but is not limited to, data in the application layer. For example, the electronic device 101 may receive information (e.g., SIBs) associated with a neighbor cell from a network (cell or base station). Independently, the electronic device 101 may receive information associated with neighbor cells from the server 400, and this information may be referred to as big data-based neighbor cell-related information to distinguish it from information (e.g., SIBs) received from the network. For example, the big data-based neighbor cell-related information may include, but is not limited to, cell identification information, location information (e.g., latitude/longitude or GPS coordinates), radio access technology (RAT) information, and/or frequency information (e.g., ARFCN). For example, the big data-based neighbor cell-related information may include not only information about neighbor cells associated with the network operator used by the electronic device 101, but also information about neighbor cells associated with other network operators. The big data-based neighbor cell-related information may, at least in part, be different from information about neighbor cells provided by the network. For example, the information about neighbor cells provided by a specific cell may be selected based on a network operator's policy and, accordingly, information about some of all neighbor cells may not be provided to the electronic device 101. In contrast, the big data-based neighbor cell-related information may include information about all (or substantially all) of the neighbor cells, independent of the network operator's policy.

Referring to FIG. 4, the electronic device 101 may transmit information associated with a first cell to a server 400 in operation 411. For example, the electronic device 101 may transmit cell identification information (physical cell ID) of the first cell to the server 400, but the information associated with the first cell is not limited as long as the information is capable of identifying the first cell. The server 400 may transmit information about the at least one first cell determined based on the information associated with the first cell to the electronic device 101 in operation 413.

In an example, the electronic device 101 may transmit, to the server 400, information about cells that have been connected in the past and/or are currently connected, based on a stored connection history. For example, the electronic device 101 may transmit, to the server 400, information about a plurality of cells that have been connected in the past. Based on the received information about the plurality of cells, the server 400 may configure information about the at least one cell and transmit the same to the electronic device 101. For example, the electronic device 101 may transmit, to the server 400, information (e.g., cell identification information) about cells that have been occupied for a relatively long period of time. In an example, the electronic device 101 may transmit, to the server 400, information (e.g., cell identification information) about a designated number of cells (e.g., number of 20) that have recently been occupied. Based on the received information about cells, the server 400 may configure information about the at least one cell and transmit the same to the electronic device 101. For example, the electronic device 101 may transmit the information about the cells 323, 324, and 325 in FIG. 3 to the server 400. The server 400 may configure information about neighbor cells (e.g., cells 311 to 327) around the cells 323, 324, and 325, based on the electronic device 101 being located near the cells 323, 324, and 325, as information about the neighbor cells, and may transmit the information to the electronic device 101.

For example, in a state of being associated with the first cell, the electronic device 101 may transmit information about the currently connected first cell to the server 400. The server 400 may, based on the received information about the first cell, configure and transmit information about at least one neighbor cell to the electronic device 101. For example, in a state of being connected to the cell 323 of FIG. 3, the electronic device 101 may transmit information about the cell 323 to the server 400. The server 400 may configure information about neighbor cells (e.g., cells 311 to 327) surrounding the cell 323, based on the electronic device 101 connected to the cell 323, as the information about neighbor cells, and may transmit the information to the electronic device 101. However, there is no restriction on the information transmitted from the electronic device 101 that is used by the server 400 to identify neighbor cells.

For example, the electronic device 101 may transmit, to the server 400, information about a cell in which a designated event has occurred. The event may include, for example, but is not limited to, a call drop, a crash, a PDP failure, an attach (or, registration) failure, and/or a radio link failure (RLF). Based on the received information about the cell, the server 400 may configure and transmit information about the at least one neighbor cell to the electronic device 101. For example, the electronic device 101 may transmit information about the cell 323 to the server 400, based on an event that has occurred in the cell 323 of FIG. 3. The server 400 may configure information about neighbor cells (e.g., cells 311 to 327) surrounding the cell 323, based on the electronic device 101 being connected to the cell 323, as information about the neighbor cells, and may transmit the information to the electronic device 101. However, there is no restriction on the information transmitted from the electronic device 101 that is used by the server 400 to identify neighbor cells.

For example, the electronic device 101 may, at a designated period, transmit information about a cell and receive information about neighbor cells from the server 400. For example, the electronic device 101 may transmit information about the cell and receive information about neighbor cells from the server 400, based on Wi-Fi communication being connected. For example, when the event described above is detected, the electronic device 101 may transmit information about the cell and receive information about neighbor cells from the server 400. On the other hand, there is no restriction on the event and/or time at which the electronic device 101 receives information from the server 400, and depending on the implementation, the server 400 may be implemented to unilaterally provide information about at least one neighbor cell to the electronic device 101 even if information is not received from the electronic device 101.

As described above, the electronic device 101 may transmit information about a cell to the server 400, and the server 400 may configure information about at least one neighbor cell to be transmitted to the electronic device 101, based on the received information. The server 400 may, for example, update the electric field map 300 by using the information about the cell received from the electronic device 101.

In an alternative example, the electronic device 101 may transmit location information (e.g., latitude/longitude or GPS coordinates) to the server 400 instead of the information about cell. The server 400 may configure information about at least one neighbor cell to be transmitted to the electronic device 101, based on the received location information. For example, the electronic device 101 may transmit current location information to the server 400, and the server 400 may transmit, to the electronic device 101, information about at least one neighbor cell located in the vicinity of the current location information of the electronic device 101.

Although not shown, the electronic device 101 may, but is not limited to, perform RAN-related operations and/or core network-related operations by using the received information about the at least one neighbor cell. For example, the electronic device 101 may perform a scan by using the received information about the at least one neighbor cell, which will be described later. As described above, the network may not provide the electronic device 101 with some of the information about all neighbor cells, and in this case, the electronic device 101 may operate using information about substantially all neighbor cells, based on information about neighbor cells received from the server 400 but not provided by the network. As described above, the network may not provide information about cells of other network operators, and in this case, the electronic device 101 may operate using information about cells of other network operators, received from the server 400 but not provided by the network. For example, the electronic device 101 may operate, using big data-based neighbor cell-related information to identify cells that are expected to have a low probability of connection and/or relatively poor quality among the neighbor cells identified based on the information received from the network.

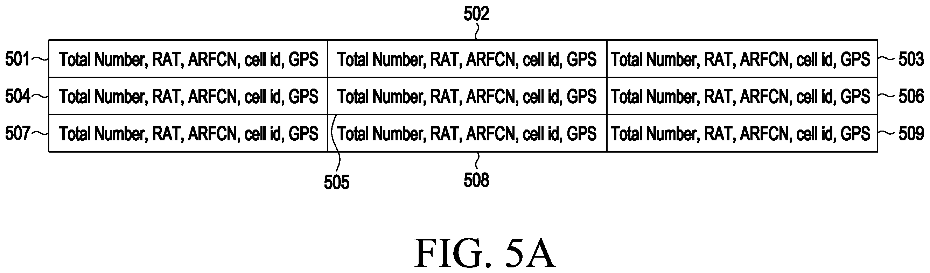

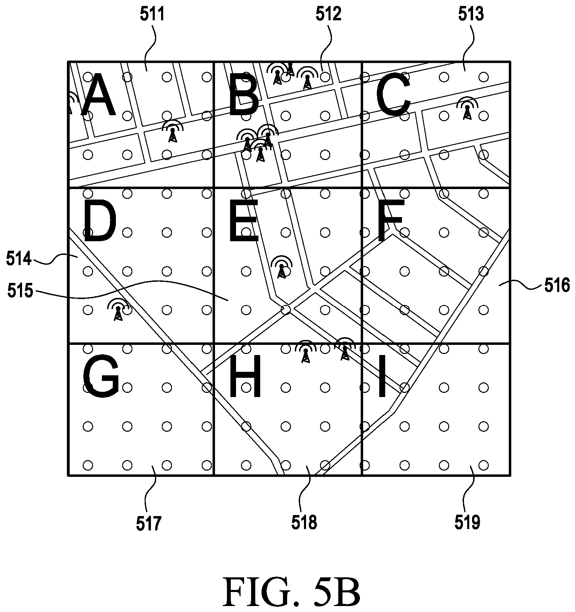

FIG. 5A illustrates information about neighbor cells according to an embodiment. The embodiment of FIG. 5A will be described with reference to FIG. 5B. FIG. 5B is a drawing to illustrate a field map according to an embodiment.

Referring now to FIG. 5A, information about at least one neighbor cell transmitted from the server 400 to the electronic device 101 is shown. In an example, it is assumed that the information about at least one neighbor cell of FIG. 5A is configured based on the electric field map of FIG. 5B. A first part 501 of the information about at least one neighbor cell of FIG. 5A may, for example, correspond to a first part 511 of the electric field map of FIG. 5B. For example, the first part 501 of the information about at least one neighbor cell may include information about cells included in the first part 511 of the electric field map. For example, the first part 501 of the information about at least one neighbor cell may include, but is not limited to, a total number of cells in the corresponding region, information about the RATs supported, information about the frequency (ARFCN), cell identification information (cell id), and/or location information (GPS) (or, latitude/longitude). Table 1 is an example of the first part 511.

**[Table 1]**

| Total number | Cell identification information | RAT | Frequency | Location information |
|---|---|---|---|---|
| 3 | Cell id #1 | E-UTRA | ARFCN #1 | Latitude#1/Longitude#1 |
| | Cell id #2 | NR | ARFCN #2 | Latitude#2/Longitude#2 |
| | Cell id #3 | NR | ARFCN #3 | Latitude#3/Longitude#3 |

For example, parts 501 to 509 of the information about at least one neighbor cell of FIG. 5A may correspond to parts 511 to 519 of the electric field map of FIG. 5B, respectively. However, it will be appreciated by those skilled in the art that the form of parts 501 to 509 in FIG. 5A is merely intended to intuitively represent the correspondence with parts 511 to 519 of the electric field map of FIG. 5B, and that the information about the neighbor cells may also be represented as a list configured by text. At least some of the information in Table 1 may be omitted, and in addition, other pieces of information may be provided in conjunction with the cell identification information. Information about neighbor cells may include information about a cell radius, or the information about neighbor cells may be configured based on information about a cell radius. For example, the electronic device 101 may receive information such as Table 1 from the server 400, and may perform RAN-related operations and/or core network-related operations, based on the received information. For example, the electronic device 101 may receive information associated with "Cell id #1" and "Cell id #2" of the information in Table 1 from the network, or may identify the information based on a previous connection history. On the other hand, the electronic device 101 may not be able to identify information about "Cell id #3" based on the operation associated with the existing network. However, the electronic device 101 may receive the information about "Cell id #3" from the server 400 and perform an operation using the information about "Cell id #3". For example, a scan may be performed using the information about "Cell ID #3" that could not be obtained by the operation related to the existing network, and the operation related to the scan and various other examples will be described later.

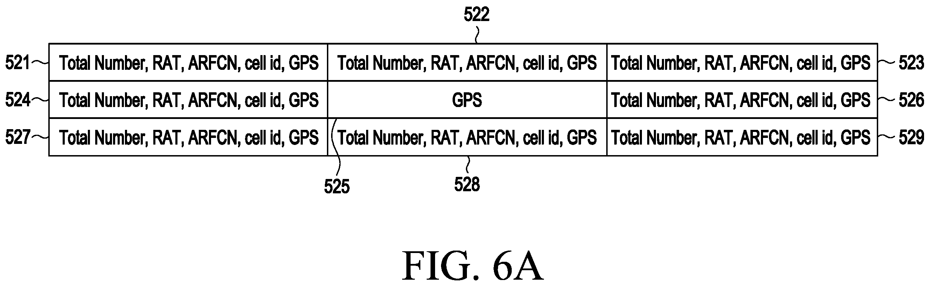

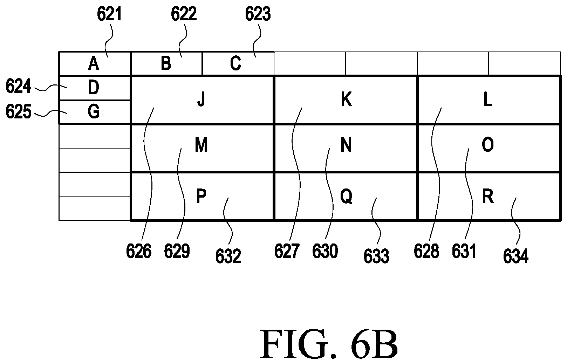

FIG. 6A illustrates information about distant neighbor cells according to an embodiment. The embodiment of FIG. 6A will be described with reference to FIG. 6B. FIG. 6B illustrates an electric field map according to an embodiment.

Referring to FIG. 6A, information about at least one distant neighbor cell transmitted from the server 400 to the electronic device 101 is illustrated. In an example, parts 521 to 529 of the information about the at least one distant neighbor cell of FIG. 6A may correspond to parts 626 to 634 of the electric field map of FIG. 6B, for example. For example, parts 621, 622, 623, 624, and 625 of the electric field map of FIG. 6B may be parts 511, 512, 513, 514, and 517 of the electric field map of FIG. 5B. A part 626 of the electric field map of FIG. 6B may be the parts 515, 516, 518, and 519 of the electric field map of FIG. 5B. Based on the information about a cell received from the electronic device 101, the server 400 may identify a part (e.g., part 630 of FIG. 6B) that does not include a cell in the electric field map. The server 400 may configure information about distant neighbor cells around a part that does not include the HPLMN or RPLMN (e.g., part 630 of FIG. 6B). For example, referring to FIG. 6A, only GPS information of the information about distant neighbor cells is reflected in the centered part 545 because the centered part 545 corresponds to the part of the information that does not include HPLMNs or RPLMNs. The server 400 may configure information 541, 542, 543, 544, 546, 547, 548, and 549 about at least one distant neighbor cell, based on the centered part 545. For example, the part 541 of information about distant neighbor cells may correspond to the part 626 of the electric field map of FIG. 6B, or the parts 516, 518, and 519 of the electric field map of FIG. 5B, but is not limited thereto. Table 2 is an example of the first part 511.

**[Table 2]**

| Total number | Cell identification information | RAT | Frequency | Location information |
|---|---|---|---|---|
| 3 | Cell id #4 | NR | ARFCN #4 | Latitude#4/Longitude#4 |
| | Cell id #5 | E-UTRA | ARFCN #5 | Latitude#5/Longitude#5 |
| | Cell id #6 | NR | ARFCN #6 | Latitude#6/Longitude#6 |

Meanwhile, it will be appreciated by those skilled in the art that the form of parts 541 to 549 in FIG. 6A is merely intended to intuitively represent the correspondence with parts 627 to 634 of the electric field map of FIG. 6B, and that the information about the neighbor cells may also be represented as a list configured by text. At least some of the information in Table 2 may be omitted, and in addition, other pieces of information may be provided in conjunction with the cell identification information. For example, the electronic device 101 may receive information such as Table 2 from the server 400, and may perform RAN-related operations and/or core network-related operations, based on the received information. For example, when a service is not provided, the electronic device 101 may provide a guide for receiving the service by using information about distant neighbor cells, which will be described later.

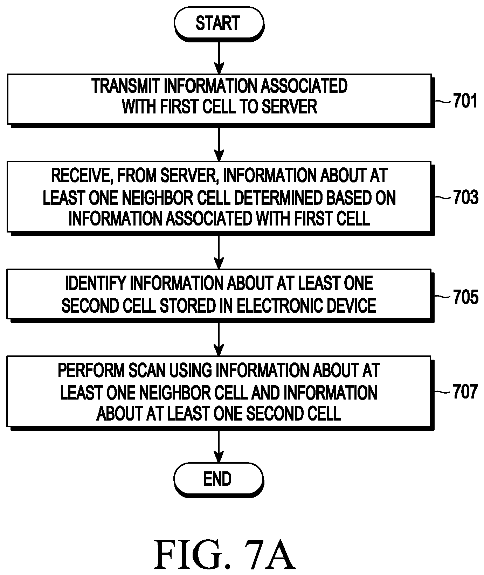

FIG. 7A is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) may transmit information associated with a first cell to a server, in operation 701. The electronic device 101 may transmit identification information of the first cell to the server as information associated with the first cell, but there is no limitation on the information associated with the first cell. The electronic device 101 may transmit not only information associated with the first cell, but also information about at least one recently connected cell. As described above, the electronic device 101 may transmit the information associated with the first cell to a server that manages information about the at least one cell. The server may configure the information associated with the at least one cell, based on the information associated with the first cell received from the electronic device 101. For example, the server may configure the information associated with the at least one cell as shown in FIG. 5A, but is not limited thereto. The operation of selecting the at least one cell has been described above and will not be repeated herein. In operation 703, the electronic device 101 may receive, from the server, the information associated with the at least one cell identified based on the information associated with the first cell. Depending on the implementation, the electronic device 101 may transmit location information of the electronic device 101 to the server and in response, receive information about the at least one neighbor cell, and those skilled in the art will understand that these alternative examples are applicable to other embodiments of the disclosure. Depending on the implementation, the electronic device 101 may also receive information about the at least one neighbor cell from the server without transmitting any information to the server, and those skilled in the art will understand that such alternative examples are applicable to other embodiments of the disclosure.

According to an embodiment, in operation 705, the electronic device 101 may identify information about at least one second cell stored in the electronic device 101. For example, the electronic device 101 may store information for performing a stored cell scan. The electronic device 101 may identify the information stored for the stored cell scan, as information about the at least one second cell. In operation 707, the electronic device 101 may perform a scan, based on the information about at least one neighbor cell received from the server in operation 703 and the stored information about the at least one second cell identified in operation 705. In an example, the electronic device 101 may perform a stored scan, based on the information about the at least one second cell and, when the search for a suitable cell has failed, may perform a scan based on the information about the at least one cell received from the server. In an example, the electronic device 101 may perform a scan based on the information about the at least one cell received from the server and, when the search for a suitable cell has failed, may perform a stored scan based on the information about the at least one second cell. In an example, the electronic device 101 may include a scan based on the information about the at least one cell received from the server in a list for a stored scan, and may perform the stored scan. For example, the operations associated with the scan may be performed by a communication processor (e.g., the first communication processor 212, the second communication processor 214, or the integrated communication processor 260). For example, the application processor (e.g., the processor 120) may be configured to, but is not limited to, provide at least a part of the information about at least one neighbor cell received from the server to the communication processor (e.g., the first communication processor 212, the second communication processor 214, or the integrated communication processor 260). Meanwhile, the electronic device 101 may determine whether a cell selection criterion is satisfied, as a criterion for determining the discovery of a suitable cell. For example, the electronic device 101 may determine that at least a part of the cell selection criteria is satisfied when Srxlev is greater than zero and Squal is greater than zero. Here, Srxlev may be Qrxlevmeas - (Qrxlevmin + Qrxlevminoffset)-Pcompensation - Qoffsettemp, and Squal may be Qqualmeas - (Qqualmin + Qqualminoffset) - Qoffsettemp, and each parameter may be defined, for example, in TS 36.304 or TS 38.304.

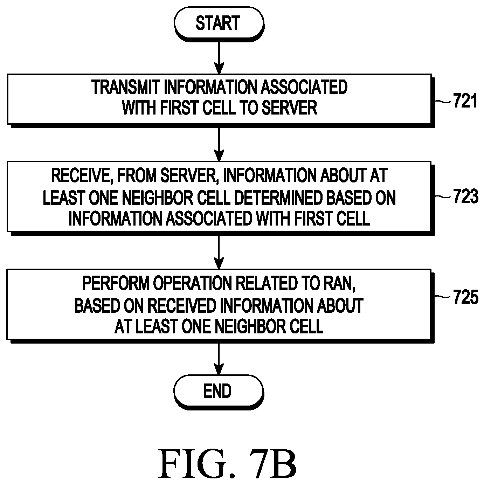

FIG. 7B is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) may transmit information associated with the first cell to the server, in operation 721. The electronic device 101 may transmit identification information of the first cell to the server as information associated with the first cell, but there is no limitation on the information associated with the first cell. The electronic device 101 may transmit not only information associated with the first cell, but also information about at least one recently connected cell. As described above, the electronic device 101 may transmit the information associated with the first cell to a server that manages information about the at least one cell. The server may configure the information associated with the at least one cell, based on the information associated with the first cell received from the electronic device 101. In operation 723, the electronic device 101 may receive, from the server, the information associated with the at least one cell identified based on the information associated with the first cell.

According to an embodiment, in operation 725, the electronic device 101 may perform operations related to a radio access network (RAN), based on the received information about the at least one neighbor cell. In an example, the electronic device 101 may perform a scan as part of the operations related to the RAN. In an example, the electronic device 101 may, as part of the operations related to the RAN, perform operations related to cell reselection. In an example, the electronic device 101 may, as part of the operations related to the RAN, perform operations related to handover (or, conditional handover). The RAN-related operations described above are exemplary and not limiting.

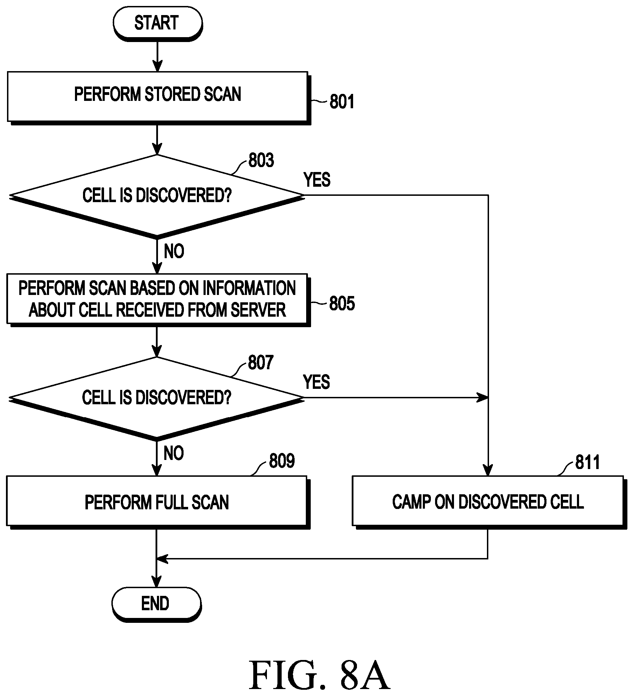

FIG. 8A is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. The electronic device 101 may perform a stored scan in operation 801. As described above, the electronic device 101 may perform a scan for cell selection based on 3rd generation partnership project (3GPP) technical specification (TS) 36.304, or 3GPP TS 38.304. In the TSs, a stored scan may be performed, and if a suitable cell is not discovered as a result of the performance, a request may be made to perform a full scan. The electronic device 101 may perform the stored scan based on the TSs in operation 801. The electronic device 101 may identify whether a cell (e.g., a suitable cell) is discovered according to the scan result. When a cell (e.g., a suitable cell) is discovered ("yes" in operation 803), the electronic device 101 may camp on the discovered cell in operation 811.

When a cell (e.g., a suitable cell) is not discovered ("no" in operation 803), the electronic device 101 according to an embodiment may perform a scan, based on the information about a cell received from the server, in operation 805. As described above, TSs may request a full scan to be performed if no suitable cell is discovered in the stored scan. However, the electronic device 101 according to an embodiment may, if no suitable cell is discovered in the stored scan, perform a scan based on the information (e.g., ARFCN, but not limited thereto) about a cell received from the server, instead of a full scan. For example, the electronic device 101 may skip a scan for the frequency already performed in the stored scan among the information (e.g., ARFCN) about a cell received from the server, thereby avoiding redundant scans for a single frequency, through operations 801 and 805, without being limited thereto. The electronic device 101 may identify whether a cell (e.g., a suitable cell) is discovered according to the scan result in operation 807. When a cell (e.g., a suitable cell) is discovered ("yes" in operation 807), the electronic device 101 may camp on the discovered cell in operation 811. When a cell (e.g., a suitable cell) is not discovered ("no" in operation 807), the electronic device 101 according to an embodiment may perform a full scan in operation 809. As described above, in the TSs, a request to perform a full scan may be made if no suitable cell is discovered in the stored scan. However, the electronic device 101 according to an embodiment may, if no suitable cell is discovered in the stored scan, perform a scan based on the information about the cell received from the server, and may perform a full scan if no suitable cell is discovered in the scan based on the information about a cell received from the server.

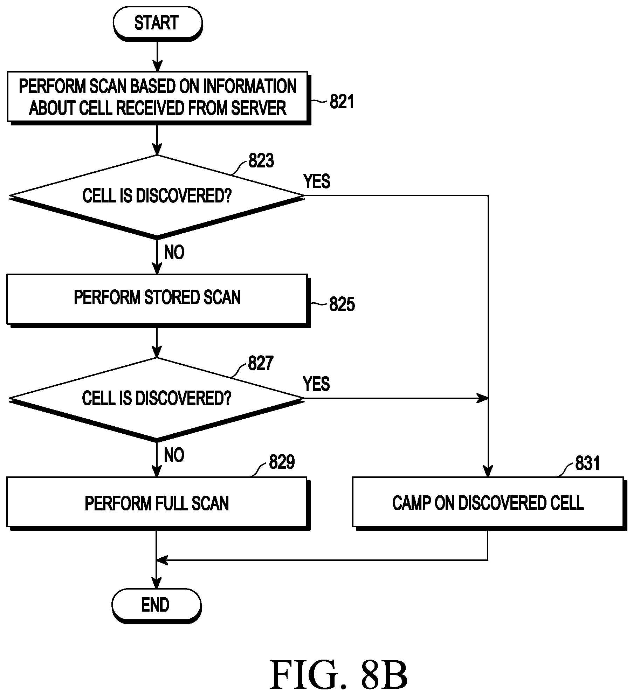

FIG. 8B is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. The electronic device 101 may perform a scan, based on the information about a cell received from the server, in operation 821. As described above, in the TSs, a request to perform a full scan may be made if no suitable cell is discovered in the stored scan. However, the electronic device 101 according to an embodiment may perform a scan based on the information (e.g., ARFCN, but not limited thereto) about a cell received from the server prior to performing the stored scan. The electronic device 101 may identify whether a cell (e.g., a suitable cell) is discovered according to the scan result in operation 823. When a cell (e.g., a suitable cell) is discovered ("yes" in operation 823), the electronic device 101 may camp on the discovered cell in operation 831.

When a cell (e.g., a suitable cell) is not discovered ("no" in operation 823), the electronic device 101 according to an embodiment may perform a stored scan in operation 825. As described above, the TSs may make a request to perform the stored scan immediately at a timepoint at which a cell scan is requested. However, the electronic device 101 according to an embodiment may first perform a scan based on the information (e.g., ARFCN, but not limited thereto) about a cell received from the server and, if no suitable cell is discovered, may perform a stored scan. For example, the electronic device 101 may skip a scan for a frequency already performed in the scan of operation 821 among the information (e.g., ARFCN) for the stored scan, thereby avoiding redundant scans for a single frequency, through operations 821 and 835, without being limited thereto . The electronic device 101 may identify whether a cell (e.g., a suitable cell) is discovered according to the scan result in operation 827. When a cell (e.g., a suitable cell) is discovered ("yes" in operation 827), the electronic device 101 may camp on the discovered cell in operation 831. When a cell (e.g., a suitable cell) is not discovered ("no" in operation 827), the electronic device 101 according to an embodiment may perform a full scan in operation 829.

In an example, when the current location of the electronic device 101 corresponds to a location where at least one neighbor cell has been downloaded from the server, the electronic device 101 may perform a scan based on the information received from the server before a stored scan, as shown in FIG. 8B. When the current location does not correspond to a location where the at least one neighbor cell has been downloaded from the server, the electronic device 101 may perform a stored scan before a scan based on the information received from the server, as shown in FIG. 8A. Meanwhile, there is no limitation on the priorities of the stored scan and the scan based on the information received from the server, and/or there is no limitation on the criteria for determining the priorities.

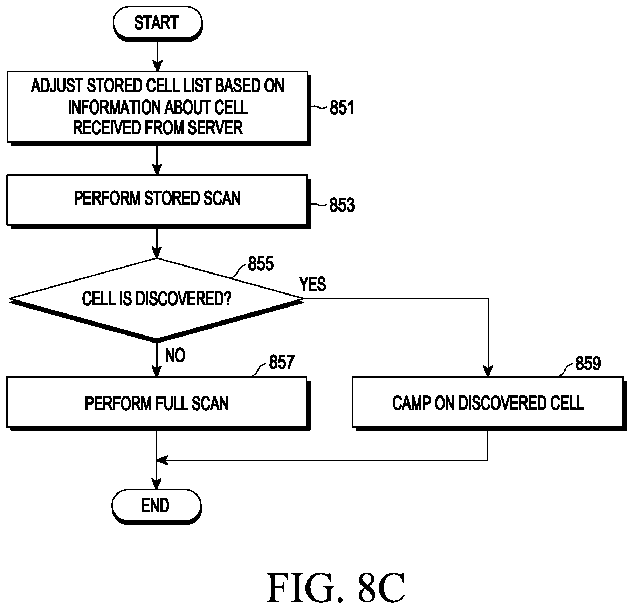

FIG. 8C is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. In operation 851, the electronic device 101 may adjust a stored cell list (or frequency list), based on the information about at least one neighbor cell received from the server. For example, the electronic device 101 may include at least a part of the information about at least one neighbor cell received from the server in the stored cell list. For example, the electronic device 101 may include, in the stored cell list, information on the remaining cells except for information on cells corresponding to other network operators among the information about at least one neighbor cell received from the server, but is not limited thereto. An example in which information on cells corresponding to other network operators is also included in the stored cell list may be possible, but is only an example. The electronic device 101 may perform a stored scan in operation 853. The electronic device 101 may identify whether a cell (e.g., a suitable cell) is discovered according to the scan result, in operation 855. When the cell (e.g., the suitable cell) is discovered ("yes" in operation 855), the electronic device 101 may camp on the discovered cell in operation 859. When the cell (e.g., the suitable cell) is not discovered ("no" in operation 859), the electronic device 101 according to an embodiment may perform a full scan in operation 857. As described above, the electronic device 101 may perform a scan using information based on big data without modifications to the legacy protocols.

For example, the electronic device 101 may receive an RRC release message including redirection information from the network during an EPS-fallback or CS-fallback. Based on the redirection information, the electronic device 101 may perform a scan and determine whether the cell selection condition is satisfied. When the cell selection condition is satisfied, the electronic device 101 may camp on the cell. When the cell selection condition is not satisfied, the electronic device 101 may perform a stored scan.

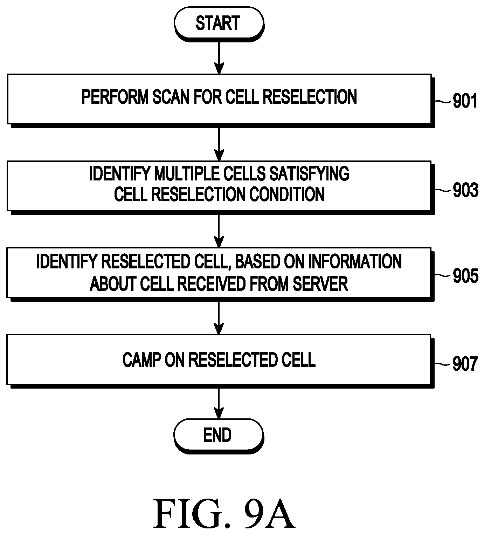

FIG. 9A is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. **In** operation 901, the electronic device 101 may perform a scan for cell reselection. For example, the electronic device 101 may perform the scan for cell reselection and/or perform a cell reselection evaluation procedure, based on identifying a trigger of a cell reselection condition. In operation 903, the electronic device 101 may identify a plurality of cells that satisfy the cell reselection condition. In operation 905, the electronic device 101 may identify reselected cells, based on information about cells received from the server. For example, based on the received information about cells, the cell that is expected to have the best communication quality among the plurality of cells may be selected. In an example, a cell that has no neighbor cells of the same frequency (or that is farthest away from other cells of the same frequency) may be selected from among a plurality of cells. The closer the cells of the same frequency are, the more likely it is that interference will occur and accordingly, a cell that has no neighbor cells of the same frequency (or that is farthest away from other cells of the same frequency) may be selected. For example, the information about cell received from the server may include location information (e.g., latitude/longitude information) and frequency information for each cell. For example, referring to Table 1, in the case of cell id #1, the frequency may be ARFCN #1 and the location information may be latitude #1/longitude #1, in the case of cell id #2, the frequency may be ARFCN #2 and the location information may be latitude #2/longitude #2, and in the case of cell id #3, the frequency may be ARFCN #3 and the location information may be latitude #3/longitude #3. The electronic device 101 may, for example, identify a cell id#(N) and a cell id#(N+1) that satisfy the cell reselection condition. Cell id#(N) corresponds, for example, to a frequency of ARFCN #1, and cell id#(N+1) corresponds, for example, to a frequency of ARFCN #4. Based on the information received from the server, such as Table 1, the electronic device 101 may identify that cell id #1 with ARFCN #1, which is the frequency corresponding to cell id#(N), is placed in nearby. This may result in a higher probability of interference occurring for cell id#(N) than for cell id#(N+1). The electronic device 101 may reselect the cell id#(N+1). The electronic device 101 may camp on the reselected cell in operation 907.

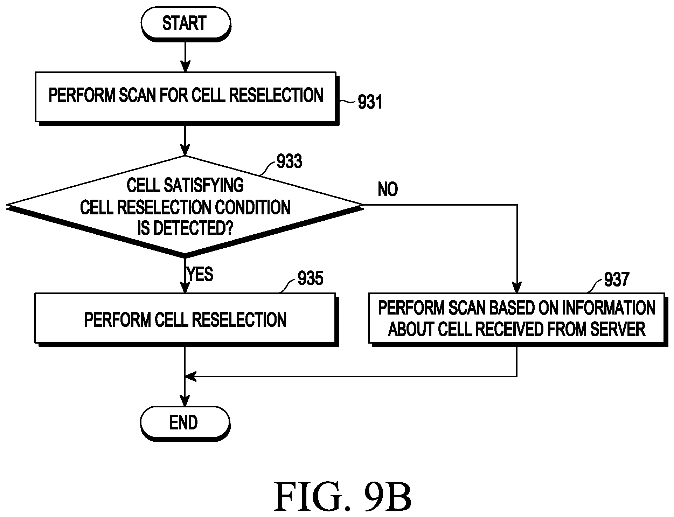

FIG. 9B is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. In operation 931, the electronic device 101 may perform a scan for cell reselection. For example, the electronic device 101 may perform a scan for cell reselection and/or perform a cell reselection evaluation procedure, based on identifying a trigger of a cell reselection condition. In operation 933, the electronic device 101 may identify whether a cell satisfying the cell reselection condition is detected. When a cell satisfying the cell reselection condition is detected ("yes" in operation 933), the electronic device 101 may perform cell reselection in operation 935. When a cell satisfying the cell reselection condition is not detected ("no" in operation 933), the electronic device 101 may perform a scan, based on the information received from the server, in operation 937. For example, the electronic device 101 may, but is not limited to, perform a scan for frequencies other than the frequencies for which the scan was performed in operation 931 among the information received from the server.

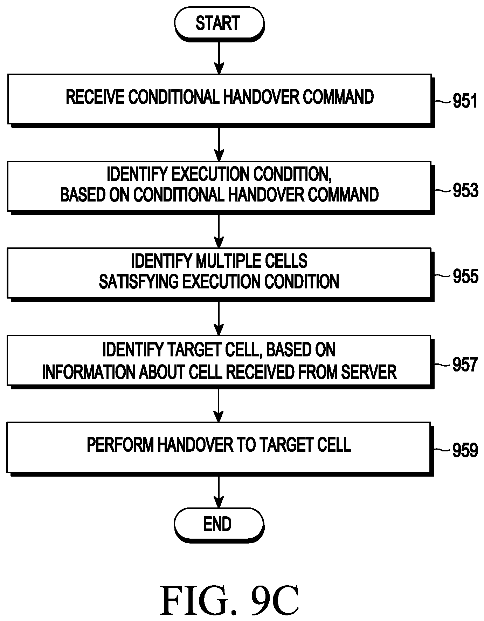

FIG. 9C is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. The electronic device 101 may receive a conditional handover command in operation 951. The electronic device 101 may identify an execution condition, based on the conditional handover command, in operation 953. For example, the electronic device 101 may evaluate the condition of each of configured candidate target cells. The electronic device 101 may apply a conditional reconfiguration associated with one of the target cells satisfying the execution condition. In Release 16, a network may provide a configuration parameter for a target SpCell within the IE of the ConditionalReconfiguration. The function of conditional handover (CHO) during conditional reconfiguration has been provided. A network that supports the function of conditional handover may transmit, to the electronic device 101, a message including information about a candidate target cell for handover and conditions for executing the handover. The electronic device 101 may perform a handover procedure for the candidate target cell if the handover execution condition is satisfied.

According to an embodiment, the electronic device 101 may identify a plurality of cells that satisfy the execution condition, in operation 955. The electronic device 101 may identify a target cell, based on information about a cell received from the server, in operation 957. In operation 959, the electronic device 101 may perform a handover to the target cell. For example, based on the received information about the cell, a cell that is expected to have the best communication quality among a plurality of cells may be selected as the target cell. In an example, among the plurality of cells, a cell that has no neighbor cells of the same frequency (or that is farthest away from other cells of the same frequency) may be selected. The closer the cells of the same frequency are, the more likely it is that interference will occur and accordingly, the cell that has no neighbor cells of the same frequency (or that is farthest away from other cells of the same frequency) may be selected as the target cell. For example, the information about a cell received from the server may include location information (e.g., latitude/longitude information) and frequency information for each cell. For example, referring to Table 1, in the case of cell id #1, the frequency may be ARFCN #1 and the location information may be latitude #1/longitude #1, in the case of cell id #2, the frequency may be ARFCN #2 and the location information may be latitude #2/longitude #2, and in the case of cell id #3, the frequency may be ARFCN #3 and the location information may be latitude #3/longitude #3. The electronic device 101 may, for example, identify that the cell id#(N) and cell id#(N+1) satisfy the execution condition of the conditional handover. It is assumed that cell id#(N) corresponds to a frequency of ARFCN #1, for example, and cell id#(N+1) corresponds to a frequency of ARFCN #4, for example. Based on the information received from the server, such as Table 1, the electronic device 101 may identify that cell id #1 with ARFCN #1, which is the frequency corresponding to cell id#(N), is placed in nearby. This may result in a higher probability of interference occurring for cell id#(N) than for cell id#(N+1). The electronic device 101 may select the cell id#(N+1) as the target cell.

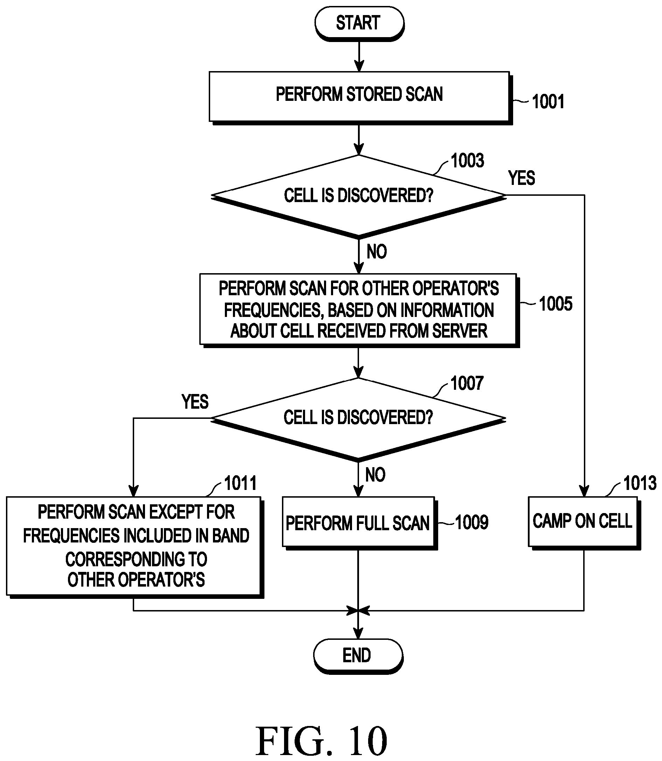

FIG. 10 is a flowchart illustrating a method of operating an electronic device according to an embodiment.

According to an embodiment, the electronic device 101 (e.g., at least one of the processor 120, the first communication processor 212, the second communication processor 214, or the integrated communication processor 260) is assumed to have received information on at least one neighbor cell from the server. The electronic device 101 may perform a stored scan in operation 1001. The electronic device 101 may identify whether a cell (e.g., a suitable cell) is discovered, in operation 1003. When a cell (e.g., a suitable cell) is discovered ("yes" in operation 1003), the electronic device 101 may camp on the corresponding cell in operation 1013. When a cell (e.g., a suitable cell) is not discovered ("no" in operation 1003), the electronic device 101 may perform a scan for other operators' frequencies, based on information about at least one neighbor cell received from the server, in operation 1005. If no suitable cell is discovered in the stored scan, the TS documentation requires a full scan to be performed. The electronic device 101 according to an embodiment may, after the stored scan fails, perform a scan for other operators' frequencies that may be identified based on the information received from the server, before performing a full scan. In operation 1007, the electronic device 101 may identify whether a cell is discovered based on the result of the scan for other operators' frequencies. If the cell is not discovered according to the result of the scan for the other operator's frequencies ("no" in operation 1007), the electronic device 101 may perform a full scan in operation 1009. In case that the cell is discovered according to the result of the scan for the other operator's frequency ("yes" in operation 1007), the electronic device 101 may perform a scan except for frequencies included in a band corresponding to the other operator's frequency from a full scan list in operation 1011. For example, in case that a cell is discovered according to the result of the scan for f1, which is the other operator's frequency, the electronic device 101 may perform a full scan, except for scans for other frequencies included in a band including f1. Accordingly, when the size of the other operator's band is 200 MHz, the electronic device 101 may skip a scan for frequencies included in 200 MHz, thereby reducing the time required for a full scan.

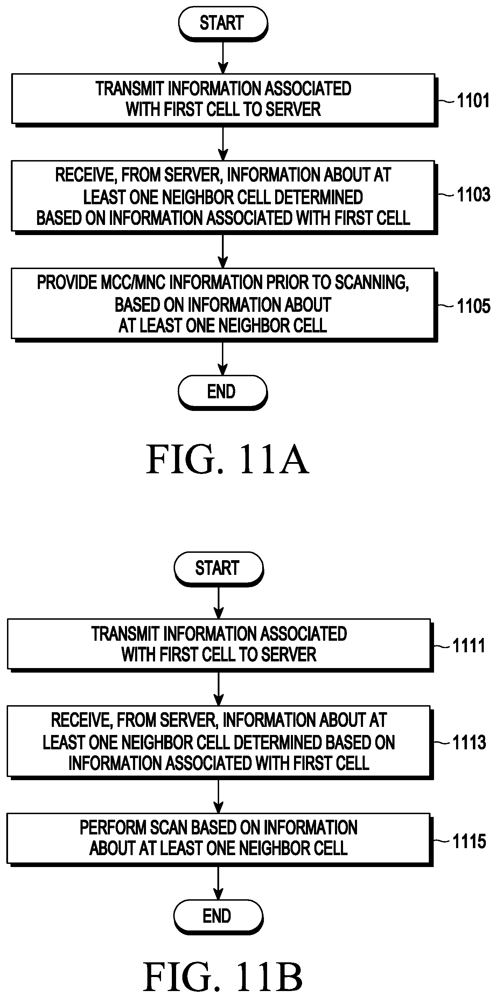

FIG. 11A is a flowchart illustrating a method of operating an electronic device according to an embodiment.

According to an embodiment, in operation 1101, the electronic device 101 (e.g., at least one of the processor 120, the first communication processor 212, the second communication processor 214, or the integrated communication processor 260) may transmit information associated with a first cell to the server. In operation 1103, the electronic device 101 may receive, from the server, information about at least one neighbor cell determined based on the information associated with the first cell. In operation 1105, the electronic device 101 may provide mobile country codes/mobile network codes (MCC/MNC) information prior to scanning, based on the information about at least one neighbor cell. For example, according to a comparative example, the electronic device 101 may perform a PLMN (BPLMN) scan in the background when operating as a manual scan. The electronic device 101 may perform a BPLMN scan. The electronic device 101 according to the comparative example may provide MCC/NCC information, based on the result of performing the BPLMN scan. In contrast, the electronic device 101 according to an embodiment may identify the MCC/NCC information, based on information received from the server without performing a BPLMN scan, and may provide the identified MCC/NCC information. Accordingly, relatively faster provision of MCC/NCC information may be possible without consuming the time required for a BPLMN scan.

FIG. 11B is a flowchart illustrating a method of operating an electronic device according to an embodiment.

According to an embodiment, in operation 1111, the electronic device 101 (e.g., at least one of the processor 120, the first communication processor 212, the second communication processor 214, or the integrated communication processor 260) may transmit information associated with a first cell to the server. In operation 1113, the electronic device 101 may receive, from the server, information about at least one neighbor cell determined based on the information associated with the first cell. In operation 1115, the electronic device 101 may perform a scan based on the information about at least one neighbor cell. As described above, when operating as a manual scan, the electronic device 101 may perform a BPLMN scan. When performing the BPLMN scan, the electronic device 101 may use information about the at least one neighbor cell received from the server. For example, the electronic device 101 may preferentially scan the information about at least one neighbor cell received from the server. Accordingly, relatively faster provision of MCC/NCC information may be possible compared to BPLMN according to the comparative example.

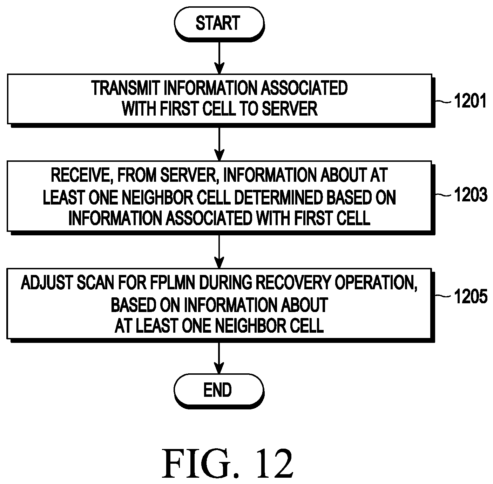

FIG. 12 is a flowchart illustrating a method of operating an electronic device according to an embodiment.

According to an embodiment, in operation 1201, the electronic device 101 (e.g., at least one of the processor 120, the first communication processor 212, the second communication processor 214, or the integrated communication processor 260) may transmit information associated with a first cell to the server. In operation 1203, the electronic device 101 may receive, from the server, information about at least one neighbor cell determined based on the information associated with the first cell. In operation 1205, the electronic device 101 may, during a recovery operation, adjust the scan for a forbidden PLMN (FPLMN) based on the information about at least one neighbor cell. For example, when it is determined that only FPLMNs currently exist in the vicinity of the electronic device 101, based on the information about at least one neighbor cell, the electronic device 101 may increase the period of the scan compared to a previous scan. For example, when it is determined that only FPLMNs currently exist in the vicinity of the electronic device 101, based on the information about at least one neighbor cell, the electronic device 101 may avoid performing scans (e.g., for a designated period of time) after performing a designated number of scans. Alternatively, when there is a cell (e.g., RPLMN, HPLMN, but not limited to) in nearby that is not an FPLMN, the electronic device 101 may preferentially perform a scan for the cell, based on the information about at least one neighbor cell.

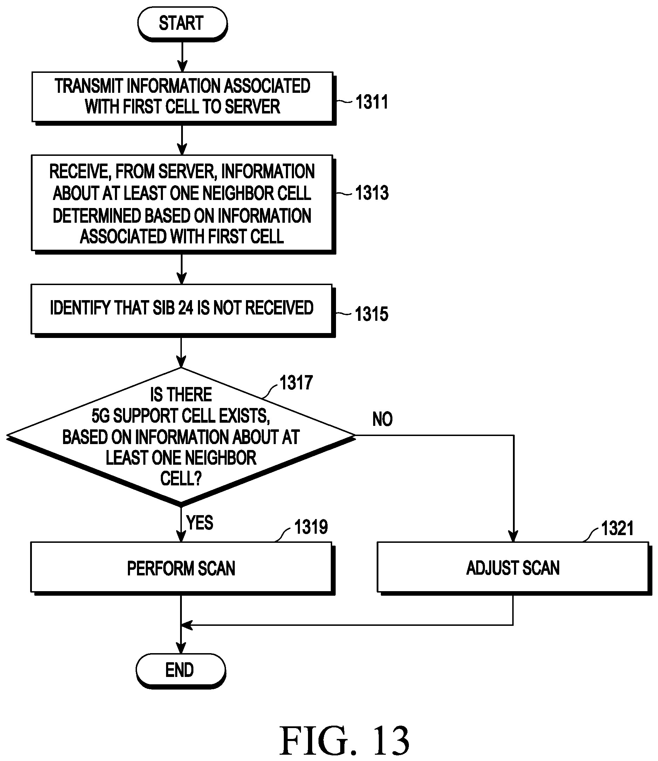

FIG. 13 is a flowchart illustrating a method of operating an electronic device according to an embodiment.

According to an embodiment, in operation 1301, the electronic device 101 (e.g., at least one of the processor 120, the first communication processor 212, the second communication processor 214, or the integrated communication processor 260) may transmit information associated with a first cell to the server. In operation 1303, the electronic device 101 may receive, from the server, information about at least one neighbor cell determined based on the information associated with the first cell. Meanwhile, in operation 1305, the electronic device 101 may identify that system information block (SIB) 24 is not received from the network. When SIB 24 is not received from the network, the electronic device 101 according to the comparative example may be configured to periodically perform a scan for 5G-SA. In contrast, when SIB 24 is not received, the electronic device 101 according to an embodiment may identify whether a 5G support cell exists, based on the information about at least one neighbor cell, in operation 1317. When the 5G support cell exists ("yes" in operation 1317), the electronic device 101 may perform a scan in operation 1319. When the 5G support cell does not exist ("no" in operation 1317), the electronic device 101 may adjust a scan in operation 1321. For example, the electronic device 101 may increase the period of a scan from the previous scan, and/or avoid performing the scan. In an example, the electronic device 101 may be configured to avoid performing a scan after performing a designated number of scans. As described above, even in the absence of a 5G support cell, the power consumption associated with performing a scan (or performing a scan at relatively short periods) may be reduced.

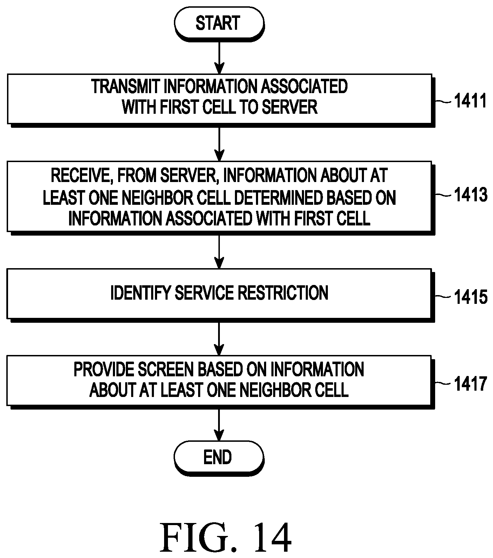

FIG. 14 is a flowchart illustrating a method of operating an electronic device according to an embodiment.

According to an embodiment, in operation 1411, the electronic device 101 (e.g., at least one of the processor 120, the first communication processor 212, the second communication processor 214, or the integrated communication processor 260) may transmit information associated with a first cell to the server. In operation 1413, the electronic device 101 may receive, from the server, information about at least one neighbor cell determined based on the information associated with the first cell. In operation 1415, the electronic device 101 may identify a service restriction (which may also be referred to as "no service"). Based on the service restriction, the electronic device 101 may provide a screen based on the information about at least one neighbor cell. For example, the electronic device 101 may provide a screen capable of indicating in which direction to move to find an acceptable cell or a suitable cell. For example, the electronic device 101 may provide a screen capable of indicating in which direction to move to find an acceptable or suitable cell based on information about distant neighbor cells. In an example, the screen may include an indicator indicating the direction of movement. In an example, the screen may be implemented in the form of a map including cells that are placed in nearby based on the current point, but is no limited thereto. For example, the electronic device 101 may display the electric field map as a screen. A user of the electronic device 101 may move to a serviceable area using the displayed screen. The electronic device 101 may be implemented so as not to provide a screen, for example, when the current location is not in a service-restricted area, but there is no limitation thereto. Alternatively, in another example, the electronic device 101 may be configured to provide an alarm indicating that service may be restricted in case that movement in a particular direction is expected to result in movement into a service-restricted area.

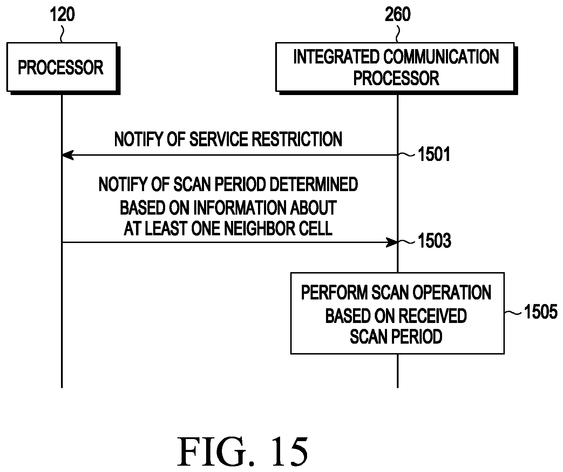

FIG. 15 is a flowchart illustrating a method of operating an electronic device according to an embodiment.

According to an embodiment, in operation 1501, the integrated communication processor 260 (or may be replaced by the first communication processor 212 or the second communication processor 214) may notify the processor 120 of a service restriction. In operation 1503, the processor 120 may notify the integrated communication processor 260 of a scan period determined based on information about at least one neighbor cell. In operation 1505, the integrated communication processor 260 may perform a scan operation based on the received scan period. For example, the processor 120 may, when a service restriction is identified, determine a scan period based on the information about at least one neighbor cell, and may notify the integrated communication processor 260 of the determined scan period. For example, when the scan period is changed, the processor 120 may provide information about whether to initiate a scan to the integrated communication processor 260. For example, when it is determined that the electronic device 101 has moved into a serviceable area while a scan is in progress or until the next scan time arrives, the electronic device 101 may immediately perform a scan according to the changed period, but is not limited thereto. The processor 120 may change the period of the scan and provide the changed period to the integrated communication processor 260.

According to an embodiment, the electronic device 101 may include at least one processor 120 of FIG. 1, and 212, 214, and 260 of FIG. 2. The at least one processor 120 of FIG. 1 and 212, 214, and 260 of FIG. 2 may be configured to transmit information associated with a first cell to a server. The at least one processor 120 of FIG. 1 and 212, 214, and 260 of FIG. 2 may be configured to receive, from the server, information about at least one neighbor cell determined based on the information associated with the first cell. The at least one processor 120 of FIG. 1 and 212, 214, and 260 of FIG. 2 may be configured to identify information about at least one second cell stored in the electronic device 101. The at least one processor 120 of FIG. 1 and 212, 214, and 260 of FIG. 2 may be configured to perform a scan using the information about the at least one neighbor cell and the information about the at least one second cell.

According to an embodiment, the at least one processor 120 of FIG. 1 and 212, 214, and 260 of FIG. 2 may be configured to, as at least a part of the operation of performing the scan using the information about the at least one neighbor cell and the information about the at least one second cell, perform a scan using the information about the at least one second cell. The at least one processor 120 of FIG. 1 and 212, 214, and 260 of FIG. 2 may be configured to, as at least a part of the operation of performing the scan using the information about the at least one neighbor cell and the information about the at least one second cell, perform a scan based on the information about at least one neighbor cell, based on identifying that no suitable cell is discovered based on the result of the scan using the information about the at least one second cell.

According to an embodiment, the at least one processor 120 of FIG. 1 and 212, 214, and 260 of FIG. 2 may be further configured to, based on identifying that no suitable cell is discovered based on the scan result based on the information about at least one neighbor cell, perform a scan for all frequencies supported by the electronic device 101.

According to an embodiment, the at least one processor 120 of FIG. 1 and 212, 214, and 260 of FIG. 2 may be configured to, as at least a part of the operation of performing the scan using the information about the at least one neighbor cell and the information about the at least one second cell, perform a scan based on the information about at least one neighbor cell. The at least one processor 120 of FIG. 1 and 212, 214, and 260 of FIG. 2 may be configured to, as at least a part of the operation of performing the scan using the information about the at least one neighbor cell and the information about the at least one second cell, perform a scan using the information about the at least one second cell, based on identifying that no suitable cell is discovered based on the result of the scan using the information about the at least one neighbor cell.

According to an embodiment, the at least one processor 120 of FIG. 1 and 212, 214, and 260 of FIG. 2 may be further configured to, based on identifying that no suitable cell is discovered based on the scan result based on the information about the at least one second cell, perform a scan for all frequencies supported by the electronic device 101.

According to an embodiment, the at least one processor 120 of FIG. 1 and 212, 214, and 260 of FIG. 2 may be configured to, as at least a part of the operation of performing the scan using the information about the at least one neighbor cell and the information about the at least one second cell, combine at least some of the information about the at least one neighbor cell into the at least one second cell, and perform a scan based on the combined information .

According to an embodiment, the at least one processor 120 of FIG. 1 and 212, 214, and 260 of FIG. 2 may be further configured to, based on identifying that no suitable cell is discovered based on the scan result based on the combined information, perform a scan for all frequencies supported by the electronic device 101.

According to an embodiment, the at least one processor 120 of FIG. 1 and 212, 214, and 260 of FIG. 2 may be further configured to, after camping on a suitable cell based on the scan result, identify a plurality of cells satisfying a condition for cell reselection. The at least one processor 120 of FIG. 1 and 212, 214, and 260 of FIG. 2 may be further configured to camp on by selecting one of the plurality of cells, based on the information about at least one neighbor cell.

According to an embodiment, the at least one processor 120 of FIG. 1 and 212, 214, and 260 of FIG. 2 may be further configured to, after camping on a suitable cell based on the scan result, perform a scan for cell reselection. The at least one processor 120 of FIG. 1 and 212, 214, and 260 of FIG. 2 may be further configured to, based on a failure in cell detection for cell reselection, perform a scan for cell reselection, based on the information about at least one neighbor cell.

According to an embodiment, the at least one processor 120 of FIG. 1 and 212, 214, and 260 of FIG. 2 may be further configured to receive a message for conditional handover from a network. The at least one processor 120 of FIG. 1 and 212, 214, and 260 of FIG. 2 may be further configured to identify an execution condition for handover, based on information included in the received message. The at least one processor 120 of FIG. 1 and 212, 214, and 260 of FIG. 2 may be further configured to identify a plurality of cells satisfying the execution condition. The at least one processor 120 of FIG. 1 and 212, 214, and 260 of FIG. 2 may be further configured to perform a handover to one of the plurality of cells, based on the information about at least one neighbor cell.

According to an embodiment, the at least one processor 120 of FIG. 1 and 212, 214, and 260 of FIG. 2 may be configured to, as at least a part of the operation of performing the scan using the information about the at least one neighbor cell and the information about the at least one second cell, perform a scan based on the information about the at least one second cell. The at least one processor 120 of FIG. 1 and 212, 214, and 260 of FIG. 2 may be further configured to, as at least a part of the operation of performing the scan using the information about the at least one neighbor cell and the information about the at least one second cell, based on identifying that no suitable cell is discovered according to the scan result based on the information about the at least one second cell, perform a scan for operator frequencies different from those of a network operator supported by the electronic device 101, based on the information about at least one neighbor cell. The at least one processor 120 of FIG. 1 and 212, 214, and 260 of FIG. 2 may be further configured to, as at least a part of the operation of performing the scan using the information about the at least one neighbor cell and the information about the at least one second cell, perform, based on a cell being discovered as a result of the scan for the different operator frequencies, a scan for at least one remaining frequency after excluding frequencies included in a band corresponding to the frequency of the discovered cell from all frequencies supported by the electronic device 101.

According to an embodiment, a period of the scan may be determined based on the information about at least one neighbor cell.

According to an embodiment, the at least one processor 120 of FIG. 1 and 212, 214, and 260 of FIG. 2 may be further configured to, based on identifying that no SIB 24 is received, identify whether a 5G support cell exists in nearby based on the information about at least one neighbor cell. The at least one processor 120 of FIG. 1 and 212, 214, and 260 of FIG. 2 may be further configured to, based on identifying that the 5G support cell exists, perform a scan for the 5G support cell.

According to an embodiment, the at least one processor 120 of FIG. 1 and 212, 214, and 260 of FIG. 2 may be further configured to identify a service restriction. The at least one processor 120 of FIG. 1 and 212, 214, and 260 of FIG. 2 may be further configured to, based on identifying the service restriction, provide a screen based on the information about at least one neighbor cell.

According to an embodiment, the information about the at least one neighbor cell may include at least one of a RAT of each of the at least one neighbor cell, a frequency of each of the at least one neighbor cell, identification information of each of the at least one neighbor cell, location information of each of the at least one neighbor cell, or the number of the at least one neighbor cell.

According to an embodiment, a method of operating an electronic device 101 may include transmitting information associated with a first cell to a server. The method of operating an electronic device 101 may include receiving, from the server, information about at least one neighbor cell determined based on the information associated with the first cell. The method of operating an electronic device 101 may include identifying information about at least one second cell stored in the electronic device 101. The method of operating an electronic device 101 may include performing a scan using the information about the at least one neighbor cell and the information about the at least one second cell.

According to an embodiment, the operation of performing the scan using the information about the at least one neighbor cell and the information about the at least one second cell may include performing a scan using the information about the at least one second cell. The operation of performing the scan using the information about the at least one neighbor cell and the information about the at least one second cell may include performing a scan based on the information about at least one neighbor cell, based on identifying that no suitable cell is discovered based on the result of the scan using the information about the at least one second cell.

According to an embodiment, the method of operating the electronic device 101 may further include, based on identifying that no suitable cell is discovered based on the scan result based on the information about at least one neighbor cell, performing a scan for all frequencies supported by the electronic device 101.

According to an embodiment, the operation of performing the scan using the information about the at least one neighbor cell and the information about the at least one second cell may include performing a scan based on the information about at least one neighbor cell. The operation of performing the scan using the information about the at least one neighbor cell and the information about the at least one second cell may include performing a scan using the information about the at least one second cell, based on identifying that no suitable cell is discovered based on the result of the scan using the information about the at least one neighbor cell.

According to an embodiment, the method of operating the electronic device 101 may further include, based on identifying that no suitable cell is discovered based on the scan result based on the information about the at least one second cell, performing a scan for all frequencies supported by the electronic device 101.

According to an embodiment, the operation of performing the scan using the information about the at least one neighbor cell and the information about the at least one second cell may include combining at least some of the information about the at least one neighbor cell into the at least one second cell, and performing a scan based on the combined information.

According to an embodiment, the method of operating the electronic device 101 may further include, based on identifying that no suitable cell is discovered based on the scan result based on the combined information, performing a scan for all frequencies supported by the electronic device 101.

According to an embodiment, the method of operating the electronic device 101 may further include, after camping on a suitable cell based on the scan result, identifying a plurality of cells satisfying a condition for cell reselection. The method of operating the electronic device 101 may further include selecting and camping on one of the plurality of cells, based on the information about at least one neighbor cell.

According to an embodiment, the method of operating the electronic device 101 may further include, after camping on a suitable cell based on the scan result, performing a scan for cell reselection. The method of operating the electronic device 101 may further include, based on a failure in cell detection for cell reselection, performing a scan for cell reselection, based on the information about at least one neighbor cell. The method of operating the electronic device 101 may further include receiving a message for conditional handover from a network. The method of operating the electronic device 101 may further include identifying an execution condition for handover, based on information included in the received message. The method of operating the electronic device 101 may further include identifying a plurality of cells satisfying the execution condition. The method of operating the electronic device 101 may further include performing a handover to one of the plurality of cells, based on the information about at least one neighbor cell.

According to an embodiment, the operation of performing the scan using the information about the at least one neighbor cell and the information about the at least one second cell may include performing a scan based on the information about the at least one second cell. The operation of performing the scan using the information about the at least one neighbor cell and the information about the at least one second cell may include, based on identifying that no suitable cell is discovered based on the scan result based on the information about the at least one second cell, performing a scan for operator frequencies different from those of a network operator supported by the electronic device 101, based on the information about at least one neighbor cell. The operation of performing the scan using the information about the at least one neighbor cell and the information about the at least one second cell may include, based on a cell being discovered as a result of the scan for the different operator frequencies, performing a scan for at least one remaining frequency after excluding frequencies included in a band corresponding to the frequency of the discovered cell from all frequencies supported by the electronic device 101.

According to an embodiment, a period of the scan may be determined based on the information about at least one neighbor cell.

According to an embodiment, the method of operating the electronic device 101 may further include, based on identifying that no SIB 24 is received, identifying whether a 5G support cell exists in nearby based on the information about at least one neighbor cell. The method of operating the electronic device 101 may further include, based on identifying that the 5G support cell exists, performing a scan for the 5G support cell.

According to an embodiment, the method of operating the electronic device 101 may further include identifying a service restriction. According to an embodiment, the method of operating the electronic device 101 may further include, based on identifying the service restriction, providing a screen based on the information about at least one neighbor cell.

According to an embodiment, the information about the at least one neighbor cell may include at least one of a RAT of each of the at least one neighbor cell, a frequency of each of the at least one neighbor cell, identification information of each of the at least one neighbor cell, location information of each of the at least one neighbor cell, or the number of the at least one neighbor cell.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising at least one processor (120 of FIG. 1; and 212, 214, and 260 of FIG. 2),
wherein the at least one processor (120 of FIG. 1; and 212, 214, and 260 of FIG. 2) is configured to:
transmit, to a server, information associated with a first cell;
receive, from the server, information about at least one neighbor cell, determined based on the information associated with the first cell;
identify information about at least one second cell, stored in the electronic device; and
perform a scan using the information about the at least one neighbor cell and the information about the at least one second cell.

2. The electronic device of claim 1, wherein the at least one processor (120 of FIG. 1; and 212, 214, and 260 of FIG. 2) is configured to, as at least a part of the performing the scan using the information about the at least one neighbor cell and the information about the at least one second cell:
perform a scan using the information about the at least one second cell; and
based on identifying that no suitable cell is discovered based on a result of the scan using the information about the at least one second cell, perform a scan, based on the information about the at least one neighbor cell.

3. The electronic device of any one of claims 1 and 2, wherein the at least one processor (120 of FIG. 1; and 212, 214, and 260 of FIG. 2) is further configured to, based on identifying that no suitable cell is discovered based on the result of the scan based on the information about the at least one neighbor cell, perform a scan for all frequencies supported by the electronic device.

4. The electronic device of any one of claims 1 to 3, wherein the at least one processor (120 of FIG. 1; and 212, 214, and 260 of FIG. 2) is configured to, as at least a part of the performing the scan using the information about the at least one neighbor cell and the information about the at least one second cell:
perform a scan, based on the information about the at least one neighbor cell; and
based on identifying that no suitable cell is discovered based on the result of the scan using the information about the at least one neighbor cell, perform a scan using the information about the at least one second cell.

5. The electronic device of any one of claims 1 to 4, wherein the at least one processor (120 of FIG. 1; and 212, 214, and 260 of FIG. 2) is further configured to, based on identifying that no suitable cell is discovered based on the result of the scan based on the information about the at least one second cell, perform a scan for all frequencies supported by the electronic device.

6. The electronic device of any one of claims 1 to 5, wherein the at least one processor (120 of FIG. 1; and 212, 214, and 260 of FIG. 2) is configured to, as at least a part of the performing the scan using the information about the at least one neighbor cell and the information about the at least one second cell, combine at least a part of the information about the at least one neighbor cell with the at least one second cell, and perform a scan, based on the combined information.

7. The electronic device of any one of claims 1 to 6, wherein the at least one processor (120 of FIG. 1; and 212, 214, and 260 of FIG. 2) is further configured to, based on identifying that no suitable cell is discovered based on the result of the scan based on the combined information, perform a scan for all frequencies supported by the electronic device.

8. The electronic device of any one of claims 1 to 7, wherein the at least one processor (120 of FIG. 1; and 212, 214, and 260 of FIG. 2) is further configured to:
after camping on a suitable cell, based on the result of the scan, identify a plurality of cells satisfying a condition for cell reselection; and
camp on by selecting one of the plurality of cells, based on the information about the at least one neighbor cell.

9. The electronic device of any one of claims 1 to 8, wherein the at least one processor (120 of FIG. 1; and 212, 214, and 260 of FIG. 2) is further configured to:
after camping on a suitable cell based on the result of the scan, perform a scan for cell reselection; and
based on a failure in cell detection for cell reselection, perform a scan for cell reselection, based on the information about the at least one neighbor cell.

10. The electronic device of any one of claims 1 to 9, wherein the at least one processor (120 of FIG. 1; and 212, 214, and 260 of FIG. 2) is further configured to:
receive, from a network, a message for a conditional handover;
identify an execution condition for a handover, based on information included in the received message;
identify a plurality of cells satisfying the execution condition; and
perform a handover to one of the plurality of cells, based on the information about the at least one neighbor cell.

11. The electronic device of any one of claims 1 to 10, wherein the at least one processor (120 of FIG. 1; and 212, 214, and 260 of FIG. 2) is configured to:
as at least a part of the performing the scan using the information about the at least one neighbor cell and the information about the at least one second cell, perform a scan, based on the information about the at least one second cell;
based on identifying that no suitable cell is discovered based on the result of the scan based on the information about the at least one second cell, perform a scan for operator frequencies different from a network operator's frequency, supported by the electronic device, based on the information about the at least one neighbor cell; and
based on a cell being discovered as a result of the scan for the different operator frequencies, perform a scan for at least one remaining frequency after excluding frequencies included in a band corresponding to the frequency of the discovered cell from all frequencies supported by the electronic device.

12. The electronic device of any one of claims 1 to 11, wherein a period of the scan is determined based on the information about the at least one neighbor cell.

13. The electronic device of any one of claims 1 to 12, wherein the at least one processor (120 of FIG. 1; and 212, 214, and 260 of FIG. 2) is further configured to:
based on identifying that SIB 24 is not received, identify whether a 5G support cell exists in nearby, based on the information about the at least one neighbor cell; and
based on identifying that the 5G support cell exists, perform a scan for the 5G support cell.

14. The electronic device of any one of claims 1 to 13, wherein the at least one processor (120 of FIG. 1; and 212, 214, and 260 of FIG. 2) is further configured to:
identify a service restriction; and
based on identifying the service restriction, provide a screen based on the information about the at least one neighbor cell.

15. A method of operating an electronic device, the method comprising:
Transmitting, to a server, information associated with a first cell;
receiving, from the server, information about at least one neighbor cell determined based on the information associated with the first cell;
identifying information about at least one second cell, stored in the electronic device; and
performing a scan using the information about the at least one neighbor cell and the information about the at least one second cell.
